# EUROPEAN PATENT SPECIFICATION

(11) **EP 2 760 664 B1**
(45) Date of publication and mention of the grant of the patent: **06.12.2017**
(21) Application number: 12780776.6
(22) Date of filing: 25.09.2012
(51) Int. Cl.: B32B 5/26, E01B 1/00, E01C 3/06, B32B 37/04, B32B 5/02, D04H 3/147

(54) **SUB-GRADE SEPARATION MATERIALS**
MATERIAL FÜR DIE ABTRENNUNG VON ERDREICH
MATERIAU POUR LA SEPARATION DE TERRE

(30) Priority: 26.09.2011 GB 201116572
(43) Date of publication of application: 06.08.2014
(73) Proprietor: FIBERWEB GEOSYNTHETICS LIMITED, The Causeway Maldon Essex CM9 4GG (GB)
(72) Inventor: THOMAS, Basil John, Abergavenny Gwent NP7 9HH (GB)
(74) Representative: HGF Limited
(86) International application number: PCT/GB2012/052365
(87) International publication number: WO 2013/045907

(56) References cited:
- US-A- 3 670 506
- US-A- 4 311 273
- US-A- 5 877 096
- US-A1- 2002 044 842
- ISO: "Geotechnical investigation and testing -- Identification and classification of soil EN ISO 14688", 20110601, 1 June 2011 (2011-06-01), pages 1-16, XP008143842,
- J.P. GIROUD: "Geotextiles and Geomembranes", GEOTEXTILES AND GEOMERABRANES, vol. 1, 1 January 1984 (1984-01-01), pages 5-40, XP055051187,
- G.P. RAYMOND: "Railway rehabilitation geotextiles", GEOTEXTILES AND GEOMEMBRANES, vol. 17, 1 January 1999 (1999-01-01), pages 213-230, XP055051324,

## Description

The present invention relates to separator materials for sub-grade containing clay and/or silt, in particular to separator materials comprising a composite material.

Ground stabilisation can be a problem in many areas of civil engineering. Sub-grade is the term used for native ground material underneath constructions such as roads, pavements or railway tracks. The integrity of the sub-grade layer can be critical for the performance and lifetime of the construction thereon. The sub-grade must be able to maintain a load bearing capacity sufficient to support the loads transmitted from the construction. The presence of water in sub-grade materials can significantly lower the sub-grade strength and compromise the construction above. Materials are required that can provide separation, reinforcement and/or drainage in sub-surface ground.

In some parts of the world the sub-grade may be particularly sensitive to moisture failure, for example the sabkhas in the Arab Gulf - salt flats that are underlain by sand, silt or clay and encrusted with salt. A separation layer is required to keep the ground water brine away from constructions on sabkha soil.

On one hand, it can be desirable that any material layer used to separate or contain sub-grade is liquid permeable so as to allow for moisture release from the sub-grade. On the other hand, an impermeable separation material may be desirable to prevent rain water from seeping down into the sub-grade.

In railway track design the sub-grade is covered with layers of sub-ballast and ballast before laying the sleepers and railway tracks. The ballast, which is usually formed of large pieces of crushed rock, resists movement of the tracks and absorbs the load from passing trains. The ballast must be separated from the sub-grade by a sub-ballast layer that further spreads load downwards and outwards from the sleepers to reduce the pressure on the sub-grade below. The sub-ballast acts as a separator to prevent the sub-grade soil from intermixing with the ballast. A conventional sub-ballast layer is formed from well-graded sand and/or gravel. The gravel component prevents penetration downwards by the larger ballast pieces while the sand component prevents penetrations upwards by fine sub-grade particles of soil, clay and/or silt. If the sub-ballast allows water to pass down to the sub-grade then there is a risk of deterioration, especially when the sub-grade contains fine particles such as clay or silt which will dissolve when wet.

In environments subject to cyclic loading, such as railway track beds and roadways, there exists a further problem known as pumping failure. Fine particles such as clay or silt in a wet sub-grade will form a slurry when exposed to pressure, and this slurry can be pumped up through the sub-ballast e.g. under the repeated loading of trains passing overhead. The abrasive action of ballast on clay-rich sub-grade can lead to rapid disintegration of a track bed, resulting in loss of track alignment, contamination of the ballast, and high maintenance costs. However the problem of sub-grade pumping is not limited to railways and the subsidence that it causes can result in instability for any construction built thereon. In pavement constructions, for example, rocking of the concrete slabs can create high suction pressures at the sub-grade/sub-base interface that draw fines into the granular sub-base unless a suitable separator is employed.

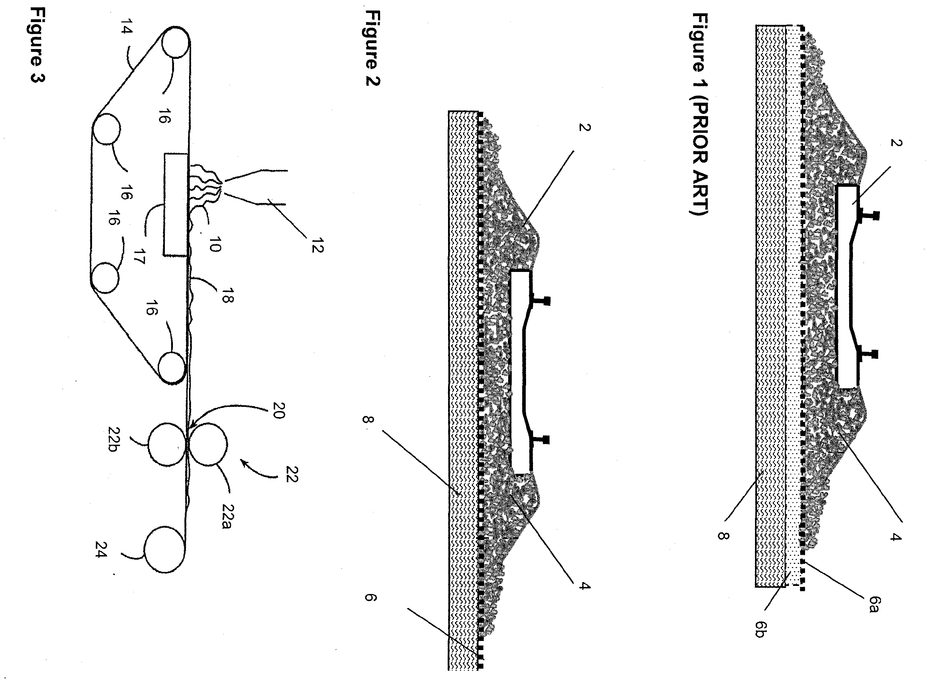

It has previously been proposed to use geotextile materials as an alternative or supplement to a traditional sub-ballast layer of sand or as a sub-grade separator. The PW range of geotextiles produced by Terram Limited includes a permeable nonwoven material (Terram PW1) that can be used as an alternative to sub-ballast over coarse or granular soils. However this material is not recommended for use directly over sub-grade susceptible to pumping failure as the mean pore size in the fibrous mat is around 85 µm. Silt particles are less than 60 µm in size and clay particles are less than 2 µm in size so they can easily pass through such a nonwoven material. As is shown in Fig. 1, a typical track bed construction (in line with code of practice RT/CE/C/039) uses a 100 mm layer of blanketing sand below a layer of Terram PW1 geotextile to minimise pumping erosion failure.

For soil sub-grade prone to pumping failure there is also provided Terram PW3, a composite material in which a layer of permeable nonwoven material (such as PW1) is laminated to an impermeable plastic film ("geomembrane"). As is described in GB 2356880, such geocomposites use one or more geotextile layers to protect the geomembrane from being punctured, while a net layer may be included to improve lateral drainage of rainwater. The geomembrane film prevents any moisture or clay slurry from being pumped out of the sub-grade. However the impermeable nature of this separator material can result in water being trapped in the sub-grade layer if drainage channels are not provided.

For new track where sub-grade erosion is expected, a product called "Tracktex" is available from GEOfabrics®. Tracktex is a composite track bed liner material comprising upper and lower support layers that sandwich a filtration layer of a microporous material which is normally impermeable to liquid water. The microporous filtration layer may be made from APTRA™ or Gore-Tex™ material. Under the load of a vehicle acting on the track bed, the filtration layer permits an upward movement of water but restricts the passage of fine solid particles, thereby preventing pumping erosion of sub-grade located beneath the liner. Such a track bed liner is described in more detail in WO 2010/131041.

Another proposed alternative to the sand blanket layer normally placed between the ballast and the sub-grade in a railway track bed is a sheet material called "Geosand" available from WTB Geotechnics. Geosand comprises a particulate material, such as sand, contained within a geosynthetic structure in the form of an open-cell matrix e.g. formed from polyethylene. The material is described in more detail in WO 2008/009882. The Geosand product is liquid permeable and thus water can pass out of the sub-grade layer beneath while clay particles are trapped in the sand-filled matrix. Using Geosand it is possible to install a consistent layer thickness of sand over an undulating surface easily and this can allow a thinner layer of sand to be applied than in conventional methods. Although installation of Geosand rolls or panel can be quicker than laying down a 10 cm thick bed of loose sand, the sheet material needs to transported on site in batches and is not particularly lightweight.

There remains a need for alternative sub-grade separation materials that are effective in various environments, easy to install and relatively low in cost.

According to a first aspect of the present invention there is provided a separator material for sub-grade containing clay and/or silt, the separator material comprising a composite formed of at least one layer of a geotextile material and at least one layer of a nonwoven fabric formed of polymeric fibres, the nonwoven fabric having been calendered so as to achieve a material that can filter out particles of clay/and or silt but is permeable to liquid while having a maximum pore size between 5 and 40 µm as determined in accordance with ASTM F316-03(2011).

It has been found that calendering can density a web of polymeric fibres so that the resultant nonwoven fabric does not permit clay and/or silt particles to pass through but still remains sufficiently porous to allow the passage of liquid e.g. water. If the polymeric fibres are very fine, for example meltblown fibres having a diameter around 1 µm, then they may tend to form a compact structure and there is a risk of the calendering process causing the polymeric material to melt and flow into the spaces between fibres to form a film-like material that is no longer permeable to liquid. In at least some embodiments it is therefore preferable for the nonwoven fabric to be substantially formed of spunbond fibres. Conventional spunbond fibres are typically around 10 µm in diameter.

It has been found that calendering a nonwoven fabric formed of spunbond polymeric fibres results in a material that can filter out particles of clay/and or silt as the fibres are compacted against one another. However the effect does not go so far as to render the material impermeable to liquid.

According to the first aspect of the invention the nonwoven fabric has been calendered so as to achieve a material that is normally permeable to liquid while also
being capable of filtering fine solid particles such as clay and/or silt. In practice this requires the material to have openings between the fibres that are relatively small but not so small as to turn the material into a liquid barrier. The maximum size of the openings is preferably at least 5 µm or 10 µm. Such openings can provide the nonwoven fabric with filtering properties with respect to solid particles while still permitting liquid to pass through. In various embodiments the nonwoven fabric preferably has a maximum pore size between 5 and 20 µm, or between 10 and 15 µm, or between 10 and 20 µm, or between 10 and 30 µm, or between 10 and 40 µm.

According to an embodiment of the present invention there is provided a separator material for sub-grade containing clay and/or silt, the separator material comprising a composite formed of at least one layer of a geotextile material and at least one layer of a nonwoven fabric formed of polymeric fibres, the nonwoven fabric being calendered so as to achieve a material that is normally permeable to liquid while having a maximum pore size between 5 and 20 µm.

According to embodiments of the invention the nonwoven fabric layer has a maximum pore size between 5 µm and 20 µm, and preferably between 10 and 15 µm, or preferably between 10 and 20 µm.

It should be understood that the maximum pore size is the bubble point pore size as determined in accordance with ASTM F316 - 03 (2011): Standard Test Methods for Pore Size Characteristics of Membrane Filters by Bubble Point and Mean Flow Pore Test. This test method may be used to determine the maximum pore size of a filter membrane having discrete pores from one side to the other, similar to capillary tubes. The bubble point test is based on the principle that a wetting liquid is held in these capillary pores by capillary attraction and surface tension, and the minimum pressure required to force liquid from these pores is a function of pore diameter. The pressure at which a steady stream of bubbles appears in this test is the bubble point pressure. It should be noted that the effective pore size calculated from this test method is based on the premise of capillary pores having circular cross sections, but a shape correction factor, called the tortuosity factor, can be applied. The value of the tortuosity factor can be changed according to the predicted shape of the pores in the fabric; a value of 1 assumes that the pores are cylindrical.

Assuming pores having circular cross sections, the mean flow pore size (also as determined by ASTM F316) for the nonwoven fabric is preferably less than 4 µm, further preferably less than 2 µm, further preferably less than 1 µm and/or preferably greater than 0.2 µm.

Furthermore, it should be understood that what is meant by the material being normally permeable to liquid is that it allows liquid water to penetrate at atmospheric pressure (zero hydrostatic head). This may be determined by any of the standard methods for determining the resistance of fabrics to penetration by water at a constant rate of increase of pressure, known as a hydrostatic head test, such as e.g. BSI BS-2823 or AS 2001 .2.17-1987. The water permeability characteristics of geotextile materials may also be determined according to Standard EN ISO 1 1058.

Thus, according to the invention defined above, there is a provided a separator material comprising a nonwoven fabric layer having a fibrous structure which is sufficiently open to allow for the passage of liquid molecules while also being sufficiently dense that the pore size is of the same order of magnitude as clay particles such that they can not substantially pass through the material. While the filtering mechanism may not be fully understood, it is hypothesised that the relatively dense fibrous structure of the nonwoven material presents a tortuous path therethrough that prevents the passage of clay particles. Clay particles are plate-shaped with a generally hexagonal form and a thickness about one tenth of the diameter, and this geometry may result in the particles becoming lodged in the fibrous mat. The fine pore size of the nonwoven material layer means that it functions in a similar way to a sand separator layer, except the composite material can be much thinner and easier to install. The invention therefore allows all granular separator material to be eliminated and replaced with a unitary geocomposite sheet.

The geotextile material layer may comprise any suitable geotextile material.

Geotextiles are permeable fabrics which are used to separate, contain, filter, reinforce, protect, and/or drain particulates such as soil. As both the nonwoven fabric layer and the geotextile layer are normally permeable to liquid, the composite separate material is also permeable regardless of whether or not a load is applied. The geotextile material may be woven but is preferably nonwoven. The nonwoven geotextile material may also be formed of polymeric fibres. Nonwoven geotextile materials may be mechanically bonded (e.g. needle punched) or thermally bonded e.g. to achieve desired strength properties. The geotextile material is preferably a spunbond nonwoven web. To aid drainage, the geotextile material preferably has a relatively open structure with a mean or characteristic pore size of at least 70 µm, 80 µm, 90 µm or >100 µm. The characteristic opening size of a geotextile material may be determined according to Standard EN ISO 12956.

It will be understood that according to the invention both the nonwoven fabric layer and the geotextile material layer are normally permeable to liquid. However, unlike the nonwoven fabric layer, the geotextile material layer is not able to filter out fine particles of clay and/or silt. A typical geotextile material, such as Terram PW1, is a thermally bonded nonwoven made of PP/PE fibres which is relatively open in its structure and has a mean or characteristic pore size of 85 µm (measured according to EN ISO 12956). Other suitable nonwoven materials are those
in the Terram range of thermally bonded nonwovens, with a characteristic pore size (measured according to EN ISO 12956) ranging from 180 µm for Terram 700 down to 75 µm for Terram 4500. Also suitable for the one or more geotextile material layers is the Terram range of needlepunched fabrics, with a characteristic pore size (measured according to EN ISO 12956) ranging from 120 µm for Terram NP3 down to ∼ 70 µm for Terram NP25.

The geotextile material layer in the composite may have one or more various functions. For example, the geotextile material may protect the nonwoven fabric layer from abrasion or puncturing e.g. when used to separate ballast from the sub-grade in a railway track bed. This can remove the need to use a layer of sand or other protective material above the separator material. Also, or instead, the geotextile material may provide an additional filtration and/or drainage layer. It can help rainwater absorbed by the composite to drain away laterally. Preferably the separator material is a structurally integral composite, so that both layers are always deployed together and there is no risk of shearing between the layers during use. The geotextile material layer and the nonwoven fabric layer may be laminated together. The geotextile material layer can help to provide the composite with a high tensile strength and improved its handling. Some different composite forms of the separator material will be described in more detail below.

An advantage of the separator material being permeable to liquid is that it does not allow a build-up of water pressure in the sub-grade which can cause problems such as subsidence and pumping failure. Also water expelled from the sub-grade below can drain away laterally through the geotextile material layer. Because moisture can escape from the sub-grade through the separator material, the sub-grade layer can dry out e.g. after rainfall but without any clay and/or silt particles contaminating the layers of ballast or other construction that may be above. It is thought that the separator material may even become more effective with age as a clay particle filter, as the clay that is trapped in the nonwoven fabric might dry out to form a "biscuit" that increases the particulate barrier properties of the material. The ability of the separator material layer to transmit liquid water under normal i.e. atmospheric pressure conditions can be contrasted with microporous materials such as APTRA™ or Gore-Tex™ which are breathable but act as a liquid barrier up to a substantial hydrohead (e.g. at least 10 cm).

Another advantage of the separator material comprising a composite formed of (at least) a nonwoven mat of polymer fibres and a geotextile material is that it can be relatively lightweight. The separator material can be provided in panel form or in sheet form on a roll, providing coverage for a relatively large area of sub-grade without taking up a large volume during transportation. The weight of the geocomposite can make it easy to transport and handle, for example as compared to a sheet product such as Geosand, while also being quicker to install than a conventional sand layer.

Another advantage of the separator material comprising a calendered nonwoven fabric is that this material layer can be relatively strong and coherent in its tensile response even on its own. This can reduce the protective function required of the geotextile material layer and potentially remove the requirement for multiple protective layers of geotextile material. Unlike other known track bed liner materials, for example, the separator material layer might not need to be sandwiched between thick layers of cushioning geotextile. While a nonwoven fabric is already quite amorphous, the calendering process helps to compact the fibrous structure. Some preferred features of the nonwoven fabric and the calendering to which it may be subjected are described in more detail below.

The nonwoven fabric may be formed from meltblown fibres, spunbond fibres, or a combination thereof. In one preferred set of embodiments the material comprises at least one layer of a spunbond nonwoven fabric comprised of a plurality of polymeric fibres, e.g. extruded through a spinneret and deposited in a random arrangement. Processes for producing spunbond nonwoven fabrics are well known and do not need to be described further. Some exemplary processes are described in US Pat. No. 3,338,992, US Pat. No. 3,802,817, US Pat. No. 4,405,297, US Pat. No. 4,812,112 and US Pat. No. 5,665,300. A meltblown nonwoven fabric may be less preferred as this process tends to produce finer fibres, e.g. microfibres, with the resultant fabric being more delicate than a spunbond fabric. The nonwoven fabric is preferably robust and strong in its own right, so that it may be laid facing the sub-grade or another granular layer without necessarily requiring a geotextile material layer on both sides. It is therefore preferred that the at least one layer of a nonwoven fabric is formed of spunbond fibres (or at least substantially formed of spunbond fibres).

The polymeric fibres that form the nonwoven fabric may be chemically homogeneous. However, it has been found that calendering such a nonwoven fabric can result in the fibres melting and fusing together to form a very dense structure that is not readily permeable to liquid. Rather, it is preferred that the polymeric fibres are multicomponent fibres comprising at least two polymer components that are arranged in substantially distinct zones within the fibres and extend continuously along the length of the fibres. In one preferred set of embodiments the nonwoven fabric layer is formed of polymeric fibres that are bicomponent fibres having first and second polymer components arranged in substantially distinct zones within the fibres, with the first polymer component formed of a relatively lower melting point polymer and the second component formed of a relatively higher melting point polymer. When the nonwoven fabric is calendered, the first polymer component may melt first and flow so as to fuse the fibres together, while the second polymer component may remain intact and provide a structural matrix so that, as a result, the pore size is small but the material is not so dense as to become impermeable to liquid.

As described above, it is preferred that the first polymer component has a melting temperature that is less than the melting temperature of the second polymer component so that the first polymer component may serve as a binder to thermally bond the individual filaments to one another. In one set of embodiments, the first (lower melting point) polymer component preferably comprises polyethylene and the second (higher melting point) polymer component is preferably selected from the group consisting of polypropylene, polyester, and nylon.

Suitable polymers for the first (lower melting point) component include polyethylene, copolymers of propylene and ethylene, copolymers of ethylene with vinyl acetate (e.g. EVA) or with ethylene acrylates (e.g. EMA1 EBA), ethylene acrylic ester terpolymers, ethylene vinyl acetate terpolymers, polylactic acid (PLA) polymers and copolymers, polypropylene, and polyester copolymers such as polyethylene terephthalate/polyethylene isophthalate copolymers. Preferred polyethylene resins include linear low density polyethylene, low density polyethylene, and high density polyethylene. In one embodiment, the first component comprises high density polyethylene having a density greater than about 0.94 g/cm³, preferably between and including 0.95 and 0.96 g/cm³.

Suitable polymers for the second (higher melting point) component include polypropylene, polyesters such as polyethylene terephthalate (PET) or polybutylene terephthalate (PBT), and polyamides such as nylon-6 or nylon 6-6. Preferably, the polymers are selected to have a difference in melting points of at least 10 °C, more desirably at least 30 °C.

Multicomponent fibres comprising a first polyethylene component and a second polyethylene terephthalate or polypropylene component may have many desirable characteristics. For example, polyethylene terephthalate has many desirable characteristics including strength, toughness, stiffness, and heat and chemical resistance. In one particularly advantageous embodiment, the nonwoven web is formed of polymeric fibres comprising a sheath of high density polyethylene that surrounds a core of polyethylene terephthalate or polypropylene.

In one set of embodiments, the bicomponent fibres have a sheath-core cross-sectional configuration with the first (lower melting point) polymer being located in the sheath and the second (higher melting point) polymer in the core. However, other cross-sectional configurations can be advantageously employed including, but not limited to, side-by-side, segmented pie and islands-in-the-sea, or tipped multi-lobal configurations.

In general, the polymer components are arranged in substantially constantly positioned distinct zones across the cross section of the multicomponent fibres and extend continuously along the length of the multicomponent fibres. The weight ratio of polymer domains or components can vary. Typically, the weight ratio of the first polymer component to the second polymer component ranges from about 20:80 to about 50:50, although the weight ratio can be outside of this range as well. In a preferred set of embodiments, the ratio of the first polymer component to the second polymer component is about 30:70.

In preferred embodiments the nonwoven fabric layer is calendered such that the lower melting point polymer is fused to the contacting surface portions of adjacent fibres to impart strength and coherency to the material. As a result of the calendering, the polymer of the lower melting point component may have softened and flowed to form a film-like texture on at least one outer surface of the nonwoven fabric layer. However, unlike a barrier film, the nonwoven fabric is normally permeable to liquid so there must remain a sufficiently open structure to allow for the passage of liquid e.g. water.

The diameter of the polymeric fibres forming the nonwoven fabric can be chosen depending on the properties desired. However it is preferred that the fibres are not as fine as microfibres. This means that the fibres can be produced by a spunbond, rather than meltblown, process. Nonwoven fabrics made from larger diameter fibres generally have greater tear resistances than those formed of microfibres. The fibre diameter being > 1 µm may also help to ensure that the nonwoven fabric is not sufficiently densified upon calendering as to become impermeable to liquid.

The or each nonwoven fabric layer may be formed of polymeric fibres having a mean fibre diameter chosen from: (i) 1-10 µm ; (ii) 1-50 µm ; (iii) 20-100 µm ; or (iv) 50-500 µm. Preferably the at least one layer of a nonwoven fabric is formed of polymeric fibres that are not meltblown fibres, preferably having a diameter > 1 µm or ≥ 5 µm, for example between 5 and 10 µm, or a diameter > 8 µm, for example between 10 and 30 µm. Meltblown fibre diameters typically range between 2-7 µm (Russell, S.J, ed. Handbook of Nonwovens. 2006, Woodhead Publishing). In a preferred set of embodiments the at least one layer of a nonwoven fabric is formed of polymeric fibres having a mean fibre diameter around 20 µm, preferably in the range 17-26 µm. The mean fibre diameter may be determined from SEM images.

The nonwoven fabric layer, whether a single layer or multiple layers, may have an overall basis weight (mass per unit area) chosen from one or more of: (i) 50-60 g/m²; (ii) 60-70 g/m²; (iii) 70-80 g/m²; (iv) 80-90 g/m²; and (v) 90-100 g/m². In a preferred set of embodiments the nonwoven fabric has a basis weight around 80 g/m². It has been found that such a basis weight makes the fabric robust enough that it can be handled and processed without being easily damaged, but it is still relatively lightweight for ease of handling. Furthermore the fabric is thin enough that heat is readily transferred therethrough so it can be easy to laminate the nonwoven fabric to the geotextile material layer (and any other material layers), for example using thermal bonding, to form the composite separator material.

The nonwoven fabric layer may comprise one or more layers of nonwoven fabric. In the case of a plurality of layers of nonwoven fabric, the layers may be bonded together to form a unitary layer. The layers may be attached to one another by point bonding, mechanical bonding or chemical bonding e.g. adhesive. However it is preferable for a plurality of nonwoven fabric layers to be thermally bonded together. The geotextile material layer may be bonded to the nonwoven fabric layers at the same time, or it may be integrated into the composite separator material in another process. However it may be preferred to reduce the number of manufacturing steps required and thus to laminate together the various layers forming the separator material in a single operation. The step of thermally bonding the geotextile material layer to the nonwoven fabric layer(s) may conveniently be integrated with the nonwoven calendering process.

It will be appreciated that the separator material of the present invention is a composite material which is structurally integral. The material may be referred to as a geocomposite. The at least one layer of a geotextile material and the at least one layer of a nonwoven fabric may be secured directly or indirectly to one other. Any suitable lamination technique may be used to adhere the geotextile material to the nonwoven fabric. This may include processes such as extrusion or calendering. However, it is desirable that the properties of nonwoven fabric - especially its permeability - are not unduly affected by the lamination process. By passing the nonwoven fabric through additional calender rolls to attach the layer(s) of geotextile material, for example, there is a risk of the material becoming overly dense and losing the porosity that provides its permeability. In some embodiments the geotextile material may be thermally bonded to the nonwoven fabric. Using one or more heated rolls to thermally bond the layers together may risk, in some circumstances, adversely affecting the nonwoven fabric. In a preferred set of embodiments, each geotextile material layer is flame laminated to a surface of the nonwoven fabric. A flame lamination technique may be preferred as it means that a surface of the nonwoven fabric is heated to form a bond but it does not involve high temperatures and pressures penetrating into the nonwoven fabric.

One or more layers of other materials may also be included in the composite, between the nonwoven fabric and the geotextiles layers, or on the outside of either the nonwoven fabric layer or the geotextile material layer. The further layer(s) may also comprise a geotextile material, either the same or different as the main geotextile material layer e.g. woven or nonwoven. In one preferred set of embodiments the separator material consists of the nonwoven fabric sandwiched between at least one upper layer of a geotextile material and at least one lower layer of a geotextile material. The geotextile material layers may be bonded to either side of the nonwoven fabric. Such additional layer(s) may provide one or more functions including wear/puncture resistance, cushioning, drainage, filtering, strength reinforcement, etc. In a set of embodiments there is provided a sacrificial layer between the nonwoven fabric and the geotextile material layer(s). The sacrificial layer(s) comprises a textile material and may further comprise a film material, for example PE film, or a textile material which is woven or nonwoven, for example a lightweight, nonwoven geotextile. The additional sacrificial layer(s) can help to bond the layers together by preferentially melting e.g. during a lamination process. Additionally or alternatively, the further layer(s) may comprise a plastic grid material such as a geogrid. Additionally or alternatively, the further layer(s) may comprise a drainage material defining one or more channels for the flow of liquid, for example a plastic drainage net, optionally covered by another layer of geotextile material. In one example, the nonwoven fabric layer may be laminated between outer layers of a thermally bonded, spunbond nonwoven geotextile material such as Terram 1000 or similar. These outer layers may protect the nonwoven fabric. In another example, at least one geotextile layer may comprise a needle punched geotextile such as Terram NP3 or similar. A needle punched geotextile may be suited to sit between the nonwoven fabric and the sub- grade. Such materials are believed to absorb shear vibrations better than thermally bonded geotextiles, and thus to be less likely to abrade the underlying sub-grade.

According to another aspect of the invention there is provided a separator material as described herein for use as a railway track bed liner.

The following terms are used in the art and are hereby defined for the avoidance of doubt:
Geosynthetic - synthetic materials (and combinations of synthetic and natural materials) suitable for use on or in the ground;
Geocomposite - a combination of any two or more geosynthetics;
Geotextile - a woven or nonwoven geosynthetic textile that is permeable to fluids (air and liquid); Geomembrane - an geosynthetic sheet that is impermeable to fluids (air and liquid);
Geogrid/net - a geosynthetic sheet in the form of a grid/net (i.e. having holes therethrough); Geocore - a geosynthetic member having, or defining, one or more open channels for providing water flow or drainage.

According to a further aspect of the invention there is provided a method of making a composite separator material for sub-grade containing clay and/or silt, the method comprising: forming a nonwoven fabric from at least one layer of polymeric fibres; calendering the nonwoven fabric layer(s) to form a nonwoven fabric that is permeable to liquid while having a maximum pore size between 5 and 40 µm as determined in accordance with ASTM F316-03(2011); and adhering at least one layer of a geotextile material to the nonwoven fabric layer(s) to form a composite separator material that can filter out particles of clay/and or silt but is permeable to liquid. The invention extends to a composite separator material resulting from such a method.

A composite material made according to this method has the advantages outlined above and may have any of the preferred features that are described hereinabove, taken alone or in combination. In particular, it is preferred that the nonwoven fabric is formed of spunbond, rather than meltblown, fibres.

It will be understood that the calendering step is preferably achieved using one or more hot rollers. The calendering step may comprise passing the nonwoven fabric through a pair of heated calender rolls. This can provide the desired results in a single pass. Additionally or alternatively, the calendering step may be repeated more than once. In a preferred set of embodiments the calendering step comprises contacting one surface of the nonwoven fabric with a heated calender roll, and the opposite surface with an unheated calender roll or anvil. This calendering step may be repeated with the opposite surface of the nonwoven fabric contacting a heated roll instead of an unheated roll or anvil. In various embodiments the one or more hot rollers are preferably hard-surfaced e.g. steel rolls.

The steps of calendering the nonwoven fabric and adhering a geotextile material layer may be performed simultaneously, e.g. the geotextile material layer(s) being adhered as part of the same in-line calendering process, or they may be performed separately, e.g. the geotextile material layer(s) being adhered in a process subsequent to the calendering step. It is preferable for the nonwoven fabric layer(s) to be calendered in an upstream step, separately from adhering the layer(s) of geotextile material, as the web processing speed is typically much faster for calendering (e.g. 300 m/min as compared to around 20 m/min). Furthermore, while at least one geotextile layer may be adhered to the nonwoven fabric during the calendering process, this does not preclude one or more further geotextile layer(s) being added to the composite in later processing steps. One or more layers of other materials such as a geogrid, net or mesh may also be added to the composite.

As is mentioned above, it may be preferable to use flame lamination instead of thermal bonding (using one or more hot rolls), or other lamination techniques, to adhere the geotextile material layer(s) to the nonwoven fabric layer(s). This can help to ensure that the nonwoven fabric retains its permeability. Accordingly, in a preferred set of embodiments the adhering step consists of using flame lamination to adhere at least one layer of geotextile material to the nonwoven fabric layer(s). The geotextile material may be adhered directly to the nonwoven fabric layer(s) or a sacrificial layer of material may be provided therebetween, to help improve adhesion.

It has been appreciated that applying a sacrificial layer of material to the surface(s) of the nonwoven fabric after the calendering step can make it easier to adhere the geotextile or other layer(s) in subsequent steps. The sacrificial layer comprises a textile material and may further comprise a film material, for example PE film, or a textile material which is woven or nonwoven, for example a lightweight,
nonwoven geotextile. The sacrificial layer may be adhesively attached to the surface(s) of the nonwoven fabric. In subsequent processing, the sacrificial layer may be melted during the adhesion step and help to form a bond between the nonwoven fabric layer(s) and the geotextile layer(s), without risking damage to the nonwoven fabric.

Furthermore it has been appreciated that calendering the nonwoven fabric layer(s) can result in a material that has slippery e.g. film-like surface(s). This can make it difficult to collect the nonwoven fabric on a take-up roll or the like. Providing a textile material as a sacrificial layer to the surface(s) of the nonwoven fabric can make it easier to handle. This feature is considered to be novel and inventive in its own right, and thus in accordance with the invention there is provided a method of making a permeable material, the method comprising: forming a nonwoven fabric from at least one layer of polymeric fibres; calendering the nonwoven fabric layer(s) to form a nonwoven fabric that is normally permeable to liquid while having a maximum pore size between 5 and 40 µm; adhering a textile material to at least one surface of the nonwoven fabric; and collecting the nonwoven fabric on a roll. The textile material may be woven or nonwoven. As is mentioned above, the textile material may be adhesively attached to the surface(s) of the nonwoven fabric. The method may optionally further comprise the steps of unreeling the nonwoven fabric from the roll and adhering at least one layer of a geotextile material to the nonwoven fabric to form a composite material.

Adhesion can be enhanced by the presence of the intervening textile material. The composite material may be suitable as a separator material that can filter out particles of clay/and or silt while also being permeable to liquid. The maximum pore size is preferably between 5 and 20 µm, or between 10 and 15 µm, or between 10 and 20 µm, or between 10 and 30 µm, or between 10 and 40 µm.

The methods described above are particularly suited to making a separator material that can be laid over sub-grade in a ground stabilisation application, in particular as an alternative or addition to sub-ballast in a railway track bed. In fact, the Applicant has recognised that the densified nonwoven fabric resulting from the calendering process can have sufficient strength to act as a filter material for fine sub-grade particles of clay and/or silt without necessarily requiring the support or protection of an additional geotextile material layer. Thus, from a further aspect of the invention there is provided a method of ground stabilisation comprising: providing a separator material in situ to separate a layer of sub-grade containing clay and/or silt, the separator material comprising at least one layer of a nonwoven fabric formed of polymeric fibres, the nonwoven fabric having been calendered so as to achieve a material that can filter out particles of clay/and or silt but is normally permeable to liquid.

According to a yet further aspect of the invention there is provided a method of lining a railway track bed, the method comprising: providing a separator material comprising at least one layer of a nonwoven fabric formed of polymeric fibres, the nonwoven fabric having been calendered so as to achieve a material that can filter out particles of clay and/or silt but is permeable to liquid while having a maximum pore size of between 5 and 40 µm as determined in accordance with ASTM F316-03(2011); and installing the separator material in the track bed between a sub-grade layer and a ballast layer.

In embodiments according to the latter two further aspects of the invention, there may be provided an additional step of adhering the at least one layer of nonwoven fabric to one or more layers of a geotextile material before installing the separator material. In some embodiments there may be provided an additional step of applying a sacrificial layer of material to the surface(s) of the nonwoven fabric after the calendering step, e.g. before any further layer(s) of geotextile material or other material are added. It may therefore be preferred that the separator material is a composite separator material formed of at least one layer of a geotextile material and at least one layer of a nonwoven fabric. In addition, the composite separator material may optionally be provided with one or more other layers such as a geogrid, net or mesh.

Preferably, the layers may have been laminated together to form a unitary composite material.

According to embodiments of any of the aspects of the invention, the nonwoven fabric may have been calendered so as to achieve a maximum pore size between 5 and 20 µm, or between 10 and 15 µm, or between 10 and 20 µm, or between 10 and 30 µm, or between 10 and 40 µm.

In embodiments of any of the methods described above, there may be provided a step of treating the surface(s) of the nonwoven fabric. It has been found that the polymeric fibres forming the nonwoven fabric, for example fibres comprising polyethylene, may result in the material having hydrophobic tendencies. In combination with the relatively small pore size of the calendered nonwoven fabric, this can result in a relatively low wettability. While the nonwoven fabric may be porous enough to allow the passage of liquid, if surface tension effects are too great then liquid may be prevented from wetting the surface and then penetrating the fabric. It may therefore be preferable to treat one or more surfaces of the nonwoven fabric with a surfactant e.g. to break the surface tension. Anionic, cationic or nonionic surfactants may be used. The nonwoven fabric may be dipped into a surfactant bath or the surfactant may be applied as a foam or spray.

There will now be described an exemplary process for making a nonwoven fabric layer in accordance with some embodiments of the invention.

In the calendering operation, the nonwoven fabric passes through the nip of a pair of cooperating calender rolls under heat and pressure. As is described above, the heat and pressure preferably causes the lower melting point (e.g. sheath) polymer component to be melted or softened and to fuse to the outer (e.g. sheath) polymer component of adjacent fibres to produce a strong and coherent nonwoven fabric. However, the degree of calendering is such
that the fusion of the sheath polymer components does not form a continuous monolithic structure and the sheath-core structure of the fibres remains intact. As a result, throughout the thickness of the nonwoven fabric layer there are small randomly spaced pore-like openings that are large enough to permit liquid molecules (as well as moisture vapour and air) to be transmitted through the fabric while substantially preventing fine particles such as clay particles from passing into and through the fabric. The relatively dense and compact structure of the nonwoven fabric layer is distinct from conventional nonwoven geotextile materials. However the nonwoven fabric still has a softness and flexibility that is not found in plastic film materials.

The calendering operation preferably comprises contacting one of the exposed surfaces of the nonwoven fabric with an (internally) heated smooth calender roll, and the opposite exposed surface with an unheated smooth calender roll or anvil. As a result, after one pass, the nonwoven fabric layer may exhibit a different appearance on its opposite outer surfaces. One outer surface of the fabric may exhibit a relatively smooth film-like surface texture where a substantial portion of sheath component has melted and flowed together as a result of contacting the heated surface of the calender roll. On the opposite surface, where the nonwoven fabric contacted the unheated surface of the anvil roll, the surface of the sheet material may have a discernibly different appearance with a filamentary texture exhibiting the appearance of flattened fibres. On this surface the fibres retain their individuality as the sheath polymer has not flowed to form a film-like surface, and there may be large spaces between the filaments that communicate with interior voids or passageways within the thickness of the fabric. Alternatively, both surfaces may by contacted by a heated calender roll to produce a film-like texture on both of the exposed surfaces of the sheet material. This may be achieved by passing the fabric through two heated calender rolls, or by repeating the operation described above the opposite surface contacting the heated roll.

In one set of embodiments, the nonwoven fabric may be calendered as soon as the fibres have been deposited, by directing the fabric straight into and through a pressure nip formed by calender rolls e.g. comprising a heated roll and a hard-surfaced anvil roll. The heated roll may be internally heated in a conventional manner, such as by circulation of a heat transfer fluid through the interior of the roll. The anvil roll may also be heated in a similar manner. Preferably the time, temperature and pressure conditions at the calender nip are sufficient to heat the fibres to cause the lower melting point first polymer component to melt and flow together so that the fibres are fused together. In one embodiment, the pressure nip applies a pressure of about 2600 to 5200 N/cm, more specifically about 3100 to about 4400 N/cm, and is heated to a temperature between about 116 and 130 °C.

In an alternative arrangement, the calendering step can be carried out off-line as a separate step. In this case, the web of fibres may be initially bonded in-line during the manufacturing process to form a coherent nonwoven fabric and then collected on a wind-up roll. The bonding can be by point bonding at discrete sites throughout the fabric, or throughout the entire fabric at locations where the fibres contact one another (area bonding). In the case of point bonding, the calender roll may include a suitably engraved roll having a pattern of projections or lands and a cooperating anvil roll.

One or more layers of the thus-formed nonwoven fabric may subsequently be subjected to an off-line calendering operation. The off-line calender apparatus can have various configurations. One suitable configuration includes two heated steel calender rolls and an unheated cotton fabric covered roll. The fabric is directed so as to s-wrap the lower bottom steel roll and to be compressed against the cotton covered roll both by the top and bottom steel rolls. When more than one nonwoven fabric layer is directed through the calender, the calendering operation bonds the layers together to form a unitary composite sheet material. Combining two or more layers advantageously enhances the spot-to-spot uniformity of the final sheet material in thickness and in strength.

While some exemplary calendering processes have been described above in the context of a nonwoven fabric formed of bicomponent polymeric fibres, it will be appreciated that it is not necessary for the fibres to comprise two different polymer components.

Some embodiments of the present invention will now be described, by way of example only, and with reference to the accompanying drawings, in which:
Figure 1 is a schematic diagram that shows a typical track bed construction according to the prior art;
Figure 2 is a schematic diagram that shows a track bed construction using a separator material according to embodiments of the present invention;
Figure 3 is a schematic diagram that shows a calendering process used to prepare a nonwoven fabric according to embodiments of the present invention;
Figure 4 is an outline of a composite manufacturing process used to prepare a separator material according to embodiments of the present invention;
Figure 5 illustrates a first example of a composite separator material;
Figure 6 illustrates a second example of a composite separator material;
Figure 7 illustrates a third example of a composite separator material;
Figure 8 illustrates a fourth example of a composite separator material;
Figure 9 provides a dry and wet flow curve for Example 1;
Figure 10 is a SEM micrograph of an external surface of a fabric sample according to Example 1;
Figure 11 is a SEM micrograph of an internal surface of a fabric sample according to Example 1; and
Figure 12 provides a comparison of maximum and mean pore size for some different example materials.

In the typical track bed construction (in line with code of practice RT/CE/C/039) seen in Fig. 1, a railway sleeper 2 is seated on ballast 4 with a sub-ballast layer 6 separating the ballast 4 from the clay sub-grade 8 below. The sub-ballast layer 6 is formed of a layer of Terram PW1 geotextile 6a laid over a 100 mm layer of blanketing sand 6b to minimise pumping erosion failure in the clay sub-grade 8.

There is seen in Fig. 2 a formation treatment that uses a composite separator material 6' as the sub-ballast layer between the ballast 4 and clay sub-grade 8. The composite separator material 6' may be made according to any of the embodiments or examples described below.

In the calendering process seen in Fig. 3, polymeric fibres 10 are deposited from a hopper 12 in a substantially random manner onto a moving carrier belt 14 that is driven over a set of rollers 16 by a conventional drive source (not shown) to form a loose web of randomly deposited fibres. Optionally, an appropriate suction means 17 may be present under the carrier belt 14 to assist depositing the fibres. Although not shown, multiple hoppers may be provided in-line to form a heavier web or a multi-layer nonwoven fabric. The advancing nonwoven fabric 18 passes from the carrier belt 14 and is directed into and through a pressure nip 20 formed by calender rolls 22. The nonwoven fabric 18 is then directed from the calender rolls 22 to a suitable take-up roll 24. A surfactant may be added to at least one surface of the nonwoven fabric 18 by any suitable method, for example by spraying a surfactant onto the fabric before it is wrapped onto the take-up roll 24.

One of the calender rolls 22a may be a hard roll, e.g. with a hardened steel surface, while the other calender roll 22b may have a relatively soft surface, e.g. of rubber or cotton. Either or both of the calender rolls 22a, 22b may be heated, for example internally heated in a conventional manner, such as by circulation of a heat transfer fluid through the interior of the roll. The time, temperature and pressure conditions at the calender nip are sufficient to heat the fibres and cause the polymer to melt so that the fibres start to fuse together in a dense structure. Where the polymeric fibres are bicomponent fibres then the calendering process may cause the lower melting point e.g. sheath polymer component to melt while the higher melting point e.g. core polymer component remains intact.

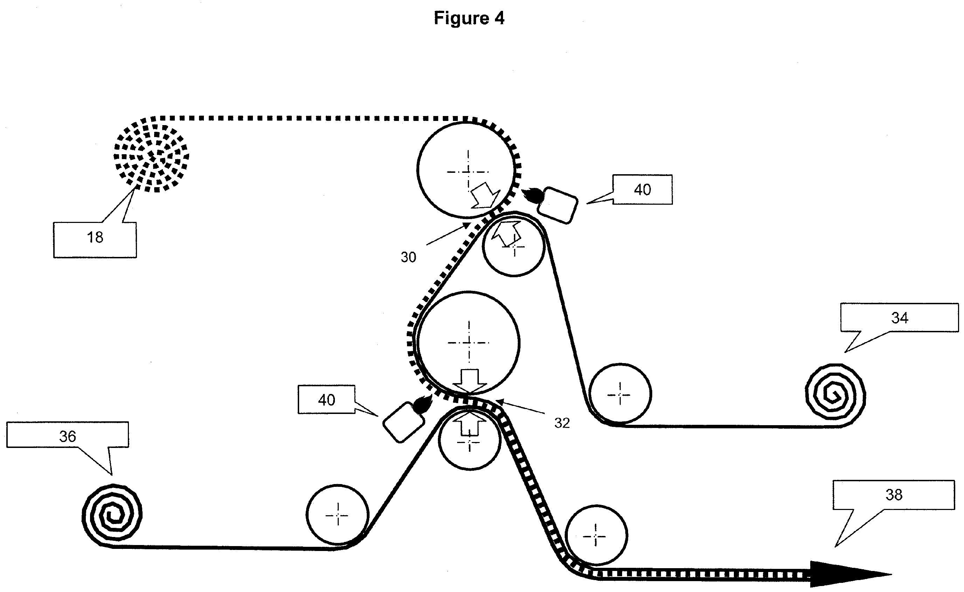

The nonwoven fabric that has been calendered is then converted into a composite separator material by adding at least one layer of a geotextile material in a subsequent manufacturing process, e.g. as depicted by Fig. 4. In this exemplary embodiment the calendered nonwoven fabric 18 is unreeled from a feedstock roll and run through two pressure nips 30, 32 formed by opposed rollers. A first geotextile material 34 is guided by a roller into the first pressure nip 30 to be laminated onto one side of the nonwoven fabric 18. A second geotextile material 36 is guided by a roller into the second pressure nip 32 to be laminated onto the other side of the nonwoven fabric 18. The composite material 38 is then guided by another roller to exit the process line.

The rollers at each pressure nip 30, 32 comprise a hard roller opposed to a soft roller, for example a steel roller and a rubber roller. The hard roller may be heated. The soft roller may be unheated or actively cooled. While the heat and pressure at the nip 30, 32 may be used to laminate the material layers together, for example using a thermal bonding process, it has been found beneficial to use flame lamination instead. It can be seen in Fig. 4 that a gas burner 40 applies a flame to one side of the nonwoven fabric as it enters each pressure nip 30, 32. The flame creates a thin layer of molten polymer on the surface of the nonwoven fabric 18 that then bonds to the surface of the geotextile material 34, 36 that is also being guided into the pressure nip 30, 32. The first geotextile material 34 is flame laminated to one side of the nonwoven fabric 18 in the first pressure nip 30 and then the second geotextile material 36 is flame laminated to the other side of the nonwoven fabric 18 in the second pressure nip 32. By using flame lamination, and applying the two geotextile material layers 34, 36 separately, it is ensured that the nonwoven fabric 18 is not overly heated. However a flame could instead be applied to both surfaces of the nonwoven fabric 18 as it passes through a single pressure nip to adhere both outer layers of geotextile material at the same time. Using flame lamination, heating is confined to the surfaces of the nonwoven fabric 18. The nonwoven fabric 18 retains its permeability and the resultant separator material is also permeable to liquid.

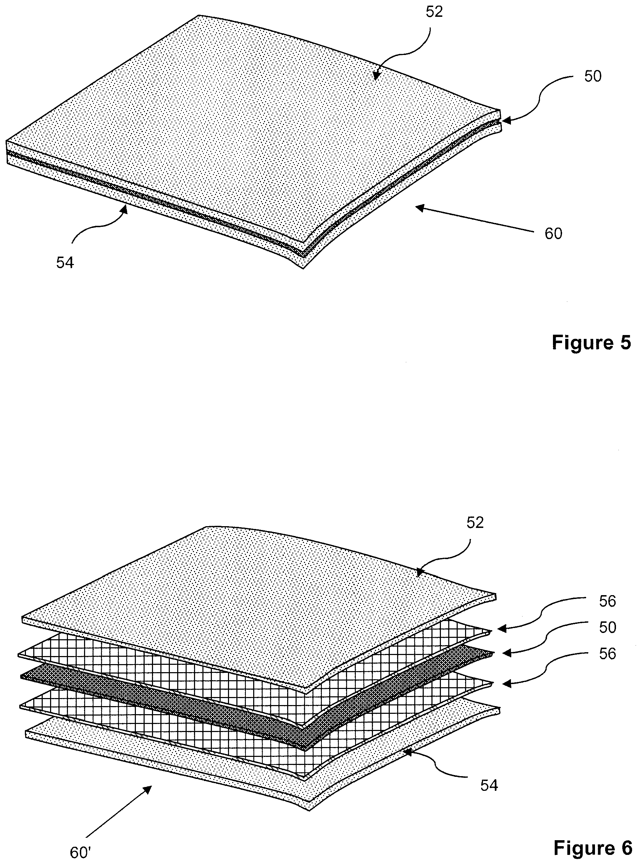

Fig. 5 illustrates an example of a composite separator material 60 made according to the methods described herein. The separator material 60 is made up of a core layer of nonwoven fabric 50, with a first geotextile material layer 52 laminated on one side and a second geotextile material layer 54 laminated on the other side. The two geotextile material layers 52, 54 may be the same material or different materials. For instance, the geotextile material layers may be chosen from the Terram range of geotextiles designated as T700, T900, T1000, T1300, T1500, T2000, T3000, T4000 and T4500 and/or from the Terram range of needlepunched geotextiles designated as NP3, NP3.3, NP4, NP5, NP6, NP7, NP8, NP9, NP11, NP14, NP17, NP19, NP22, and NP25. The geotextile material layers 52, 54 typically act to protect the core layer of nonwoven fabric 50, e.g. when the separator material 60 is used as a sub-ballast filter.

Fig. 6 illustrates another example of a composite separator material 60' made according to the methods described herein. The separator material is made up of a core layer of nonwoven fabric 50, with a first geotextile material layer 52 laminated on one side and a second geotextile material layer 54 laminated on the other side. However in this embodiment the nonwoven fabric 50 is separated from the geotextile material layers 52, 54 on either side by an intervening layer of textile material 56 acting as a sacrificial layer. The sacrificial layer 56 may be any woven or nonwoven material that is relatively thin and lightweight, for example a scrim fabric. The sacrificial layers 56 are used to protect the calendered nonwoven fabric 50 during the lamination process and can provide improved adhesion between the nonwoven fabric 50 and the outer geotextile layers 52, 54.

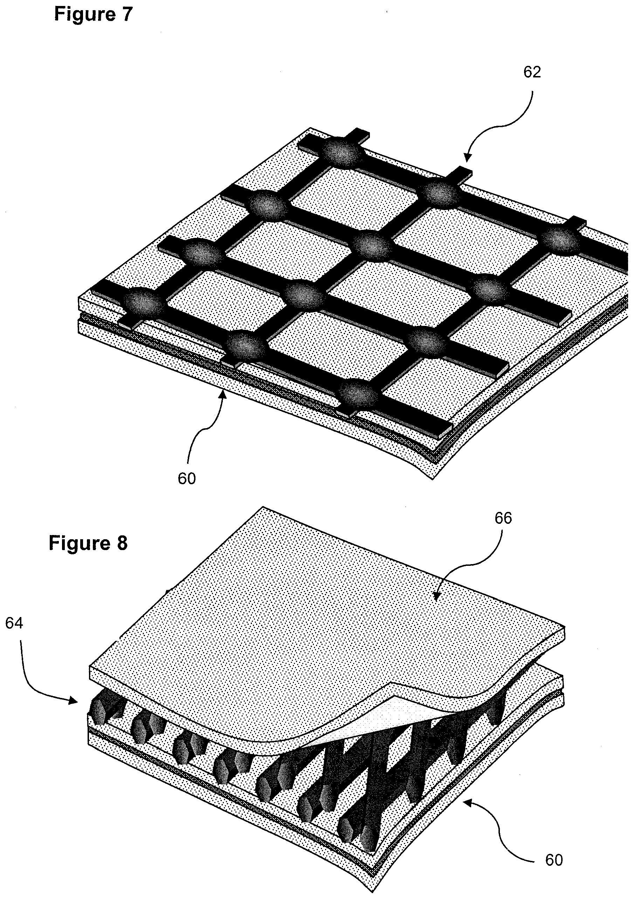

Fig. 7 illustrates another example of a composite separator material made according to the methods described herein. The fabric composite 60, 60' may be made up of the layers described above with respect to Figs. 5 or 6. A reinforcing grid or mesh 62 is then bonded to at least one outer side of the composite 60, 60', e.g. to help strengthen the material. In yet another example seen in Fig. 8, the fabric composite 60, 60' is again made up of the layers described above with respect to Figs. 5 or 6. Bonded on at least one outer side of the composite 60, 60' there is a drainage net 64 and a geotextile material layer 66 to cover the drainage net 64. When the separator material is employed as a sub-ballast filter, such a composite construction can assist with liquid being pumped out of the sub-grade through the lower layers and then passing out laterally through the drainage net 64.

### Example 1

A composite separator material was made comprising a geotextile layer and a layer of nonwoven Fabric A.

Fabric A was manufactured on a two beam spunbond machine in a single pass. The two layers of fibres were sprayed onto the wire conveyor simultaneously and point bonded to make a cohesive web. The polymeric fibres were 100% bicomponent PP/PE with a ratio of 85% to 15%. The fibre diameter was 2.4 to 2.5 decitex. The relatively large fibre size was chosen so as to endow the fabric with good strength and extensibility. The as-formed fabric had a basis weight of 90 gsm. After flat calendering the basis weight was around 80 gsm (77 ± 3 gsm).

The calendering process was carried out on a single layer of feedstock fabric, repeated so as to individually treat each side of the fabric. The calendering step used a heated steel roller in combination with a rubber coated smooth roller.

In this Example a high dose of a silicone loaded surfactant was applied to the fabric to modify the coefficient of friction of the surface.

Fabric A was then thermally bonded to a geotextile layer. The geotextile layer was a needlepunched nonwoven fabric having a basis weight in the range of 500-800 gsm, corresponding to either Terram NP5 or NP8.

### Pore size measurements

Porometry test results for Fabric A are shown in Table 1. Data pertaining to a standard meltblown filter material has been included for comparative purposes.

| | Mean Flow pore pressure (Bar) | Mean flow pore diameter (microns) | Bubble point pressure (Bar) | Bubble point pore diameter (microns) |
|---|---|---|---|---|
| Test area a | 1.815 | 0.353 | 0.046 | 13.45 |
| Test area b | 2.751 | 0.233 | 0.055 | 11.60 |
| Test area c | 1.894 | 0.338 | 0.041 | 15.66 |
| Test area d | 1.462 | 0.438 | 0.054 | 11.91 |
| Std meltblown filter material | 0.070 | 6.320 | 0.040 | 12.53 |

### Table 1 - Showing mean flow pore and bubble point pore size of samples

The pore size measurement of nonwoven Sample Fabric A was measured by means of a POROLUX 1000 Capillary Flow Porometer. The machine registers the airflow through a sample when increasing the air pressure put on the sample. The sample was first wetted out with a liquid of low surface tension and vapour pressure to ensure that the liquid remained in the sample pores until applied pressure forced the fluid out. To ensure the correct results are obtained, it is essential that the fluid does not vaporise under high pressure e.g. water. The liquid used should wet out the samples completely in order to obtain an accurate assessment of the pore size. The liquid selected for the porometry testing was Porefil as it has a low surface tension (16 mN/m). In these measurements the tortuosity factor was pre-set to 1.

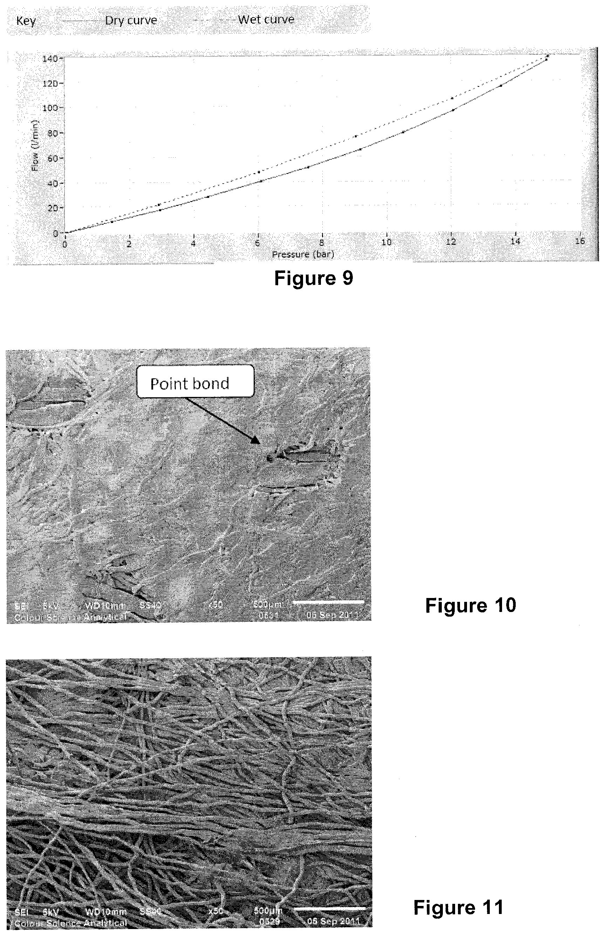

Determining the pore size distribution is of particular interest as it provides information on the maximum (bubble point pore size) and minimum range of pore sizes within the sample. Prior to testing the sample is saturated with Porefil, therefore preventing the airflow through the samples as the liquid blocks the pores within the fabric. As the pressure of gas starts to increase, it reaches a certain pressure point where it overcomes the surface tension of the liquid and expels the liquid in the largest pore; classified as the bubble point. After determining the bubble point, all measured pores decrease in size while the flow rate and air pressure through the sample continuously increase. Despite increasing the pressure to 15 bar the wet and dry curves still failed to meet when testing Sample Fabric A preventing the smallest pore size from being determined in the pore size distribution graph. The standard pressure increase for a nonwoven sample is 1 bar, which indicates that the pore sizes within Sample Fabric A, are substantially lower than those found in a standard nonwoven. Figure 9 shows the correlation between the flow rate (l/min) and the measured pressure (bar) of the dry and the wet curves for nonwoven Sample Fabric A.

The "mean flow pore diameter" measurements listed in Table 1 can be averaged to result in a mean flow pore size (MFP) of 0.34 µm. The "bubble point pore diameter" determines the maximum pore size and the average of the measurements in Table 1 is 13.16 µm. Each of these pore sizes are measured according to ASTM F316.

### Imaging

Scanning Electron Microscopy (SEM) was also used to investigate the nonwoven fabric of Sample Fabric A. Before being scanned, the nonwoven sample was sputter coated with gold. The evaluation was conducted using a Camscan series 4 Environmental SEM. Images were taken both on the external and internal surface of the fabric sample and then evaluated by means of image analysis (Image-Pro Plus, Media Cybernetics) where the fibre surface morphology could be analysed, as shown in Figures 10 & 11.

The effect of processing the fabric on a calender using a combination of both point bonding and total area bonding, seems to have caused the fibres to compress, giving the external surface of the sample a film like quality (Figure 10). The effect of the calendering however, has not totally removed all of the porous regions within the fabric, which was evident by the results obtained during the porometry analysis.

Results of the fibre diameter measurements made from the SEM image analysis are provided in Table 2. The results verify that the fibres are spunbond rather than meltblown. Meltblown fibre diameters typically range between 2-7 µm (Russell, S.J, ed. Handbook of Nonwovens. 2006, Woodhead Publishing).

**Table 2**

| | **Sample A** |
|---|---|
| Mean fibre diameter (µm) | 21.47 |
| Maximum fibre diameter (µm) | 14.50 |
| Minimum fibre diameter (µm) | 29.61 |
| Standard Deviation (σ) (mean fibre diameter) | 4.46 |
| **Fibres Counted** | **40** |

It is not evident to what extent the calendering process has had an effect on the shape of the internal fibres, however it is possible that they have undergone some change in shape after processing. The mean fibre diameter for the analysed sample was determined as 21.47 µm. If the fibres have been compressed, however, this would increase the overall averages for the recorded fibre diameters.

### Sub-grade filtering

The composite separator material made of a layer of nonwoven Fabric A and a geotextile layer was tested to determine whether it can filter out particles of clay and/or silt in a cyclic loading environment that mimics a railway track bed. A test specimen of the separator material is placed over kaolin clay in a Hollow Cylinder Apparatus (HCA) test, covered with ballast stone and then repeatedly loaded and unloaded at high pressures. Standard HCA test systems may be obtained e.g. from GDS instruments or Wille Geotechnik. Testing in a hollow cylinder apparatus can impose the cyclic rotation of the principal stress directions likely to be experienced by a soil element below a railway track as a train passes. There are standard test methods such as ASTM D5311 - 11 for load controlled cyclic triaxial soil testing. During the test the surface of the clay and the test specimen are under water. The pass/fail criteria for the sub-grade filtering test is based on visual examination of the water and ultimately evaporation of the water and weighing of any residual contaminants after the test specimen has been removed. The specimen is also visually inspected for any signs of the underlying clay having been transmitted through the separator material. No clay was seen to have penetrated the separator material. Prior to the insertion of the composite test specimen, the apparatus is operated with a standard geotextile underneath the ballast to generate a clay slurry (which is effectively the failure mode experienced under a track with pumping issues). The composite sample is then placed on this wet slurry and reversion of the slurry to a consolidated surface is further evidence of the effectiveness of the composite; this shows that the water has been squeezed out of the slurry leaving the solids behind.

### Example 2

Another composite separator material was made comprising a geotextile layer and a layer of nonwoven Fabric B.

Fabric B was manufactured in substantially the same way as Fabric A, except that the pressure used during the calendering process was reduced.

### Pore size measurements

A sample of Fabric B was tested in six places using a Capillary Flow Porometer in the same way as described above for Fabric A. The results are shown in Table 3 below. The maxiumum pore size is the bubble point pore size and MFP is the mean flow pore diameter, each measured according to ASTM F316.

**Table 3**

| **Max Pore Size** | **[µm]** |
|---|---|
| x= | 43.60 |
| s= | 12.54 |
| max= | 65.24 |
| min= | 29.09 |
| v= | 28.76 |
| n= | 6 |

| **MFP** | **[µm]** |
|---|---|
| x= | 16.73 |
| s= | 4.41 |
| max= | 21.81 |
| min= | 11.58 |
| v= | 26.34 |
| n= | 6 |

From Table 3 it can be seen that Fabric B has a maximum pore size value of 43.60 µm and a MFP value of 16.73 µm. Fabric B therefore has a much more open structure than Fabric A as a result of the calendering process.

### Sub-grade filtering

The composite separator material made of a layer of nonwoven Fabric B and a geotextile layer was tested to determine whether it can filter out particles of clay and/or silt in a cyclic loading environment that mimics a railway track bed, in the same way as is described above. Both during and after testing, clay was seen to penetrate through the separator material and therefore this material failed the test.

### Comparative Examples

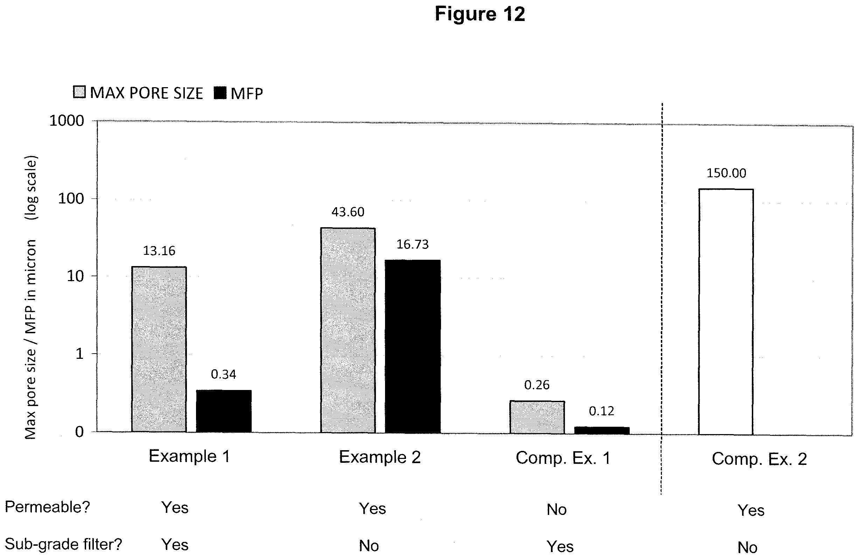

There is shown in Fig. 12 a comparison of the pore size measurements for Examples 1 and 2 with two other nonwoven materials. Comp. Ex. 1 is a microporous filtration material such as APTRA™ or Gore-Tex™ of the type used in WO 2010/131041 to provide a track bed liner that is normally impermeable to liquid. This material passes the sub-grade filtering test but the very small pore size << 1 µm means that liquid can not pass through either. Comp. Ex. 2 is a standard nonwoven geotextile (Terram 1000) having a characteristic pore size of 150 µm (EN ISO 12956). This material is normally permeable to liquid but the relatively large pore size means that it can not act as a clay filter.

From Fig. 12 it will be appreciated that a nonwoven fabric having a maximum pore size that is greater than around 1 µm and less than around 40 µm (e.g. Example 1) has the dual benefits of being permeable to liquid while still passing the sub-grade filtering test. None of the other materials are able to provide the same combination of advantages.

## Claims

1. A separator material for sub-grade containing clay and/or silt, the separator material comprising a composite formed of at least one layer of a geotextile material and at least one layer of a nonwoven fabric formed of polymeric fibres, optionally spunbond polymeric fibres, the nonwoven fabric having been calendered so as to achieve a material that can filter out particles of clay and/or silt but is permeable to liquid while having a maximum pore size between 5 and 40 µm as determined in accordance with ASTM F316-03(2011).

2. A separator material as claimed in claim 1, wherein the polymeric fibres are bicomponent fibres comprising a first polymer component formed of a relatively lower melting point polymer and a second polymer component formed of a relatively higher melting point polymer, optionally, the first polymer component and the second polymer component having a difference in melting points of at least 10°C.

3. A separator material as claimed in claim 2, wherein a weight ratio of the first polymer component to the second polymer component is 30:70.

4. A separator material as claimed in any preceding claim, wherein the nonwoven fabric has a mean flow pore size (MFP) between 0.2 and 1 µm.

5. A separator material as claimed in any preceding claim, wherein the geotextile material is a nonwoven material having a characteristic pore size that is at least 70 µm, 80 µm, 90 µm, or greater than 100 µm determined in accordance with Standard EN ISO 12956.

6. A separator material as claimed in any preceding claim, wherein the at least one layer of geotextile material and at least one layer of nonwoven fabric are laminated, optionally flame laminated, together or thermally bonded together.

7. A separator material as claimed in any preceding claim, wherein the at least one layer of a geotextile material comprises an upper geotextile layer and a lower geotextile layer and the at least one layer of a nonwoven fabric is sandwiched between the upper geotextile layer and the lower geotextile layer.

8. A separator material as claimed in any preceding claim, further comprising a textile material between the at least one layer of a nonwoven fabric and the at least one layer of a geotextile material.

9. A separator material as claimed in any preceding claim, further comprising one or more additional layers chosen from any one or more of: (i) a geotextile material; (ii) a plastic grid or mesh; and (iii) a drainage material defining one or more channels for the flow of liquid.

10. A sub-ballast separator or a railway track bed liner comprising a separator material as claimed in any preceding claim.

11. A method of making a composite separator material for sub-grade containing clay and/or silt, the method comprising:
forming a nonwoven fabric layer from at least one layer of polymeric fibres;
calendering the nonwoven fabric layer to form a nonwoven fabric that is permeable to liquid while having a maximum pore size between 5 and 40 µm as determined in accordance with ASTM F316-03(2011); and
adhering at least one layer of a geotextile material to the nonwoven fabric layer to form a composite separator material that can filter out particles of clay/and or silt but is permeable to liquid.

12. A method as claimed in claim 11, wherein adhering the at least one layer of a geotextile material to the nonwoven fabric layer comprises thermal bonding or flame lamination.

13. A method as claimed in any of claims 11-12, further comprising applying a textile material to one or more surfaces of the nonwoven fabric after calendering and before adhering at least one layer of a geotextile material to the nonwoven fabric.

14. A method as claimed in any of claims 11-13, further comprising treating a surface of the nonwoven fabric with a surfactant.

15. A method of lining a railway track bed, the method comprising:
providing a separator material comprising at least one layer of a nonwoven fabric formed of polymeric fibres, the nonwoven fabric having been calendered so as to achieve a material that can filter out particles of clay and/or silt but is permeable to liquid while having a maximum pore size of between 5 and 40 µm as determined in accordance with ASTM F316-03(2011); and
installing the separator material in the track bed between a sub-grade layer and a ballast layer.

## Patentansprüche

1. Abtrennmaterial für lehm- und/oder schluffhaltiges Erdreich, wobei das Abtrennmaterial eine Zusammensetzung umfasst, die aus mindestens einer Schicht eines Geotextilmaterials und mindestens einer Schicht eines Vliesstoffs gebildet ist, der aus Polymerfasern gebildet ist, optional aus spinngebundenen Polymerfasern, wobei der Vliesstoff kalandriert wurde, um ein Material zu erhalten, das Lehm- und/oder Schluffpartikel herausfiltern kann, aber flüssigkeitsdurchlässig ist, wobei es eine maximale Porengröße zwischen 5 und 40 µm, ermittelt gemäß dem ASTM F316-03(2011), aufweist.

2. Abtrennmaterial nach Anspruch 1, wobei die Polymerfasern Bikomponentenfasern sind, die eine erste Polymerkomponente, die aus einem Polymer mit einem relativ geringeren Schmelzpunkt gebildet ist, und eine zweite Polymerkomponente, die aus einem Polymer mit einem relativ höheren Schmelzpunkt gebildet ist, umfasst, wobei optional die erste Polymerkomponente und die zweite Polymerkomponente eine Schmelzpunktdifferenz von mindestens 10 °C aufweisen.

3. Abtrennmaterial nach Anspruch 2, wobei ein Gewichtsverhältnis der ersten Polymerkomponente zur zweiten Polymerkomponente 30:70 beträgt.

4. Abtrennmaterial nach einem der vorhergehenden Ansprüche, wobei der Vliesstoff eine mittlere Fließporengröße (MFP) zwischen 0,2 und 1 µm aufweist.

5. Abtrennmaterial nach einem der vorhergehenden Ansprüche, wobei das Geotextilmaterial ein Vliesmaterial ist, das eine charakteristische Porengröße aufweist, die mindestens 70 µm, 80 µm, 90 µm oder mehr als 100 µm, ermittelt gemäß der Norm EN ISO 12956, beträgt.

6. Abtrennmaterial nach einem der vorhergehenden Ansprüche, wobei die mindestens eine Geotextilmaterialschicht und die mindestens eine Vliesstoffschicht zusammenlaminiert, optional flammlaminiert, oder thermisch miteinander verbunden sind.

7. Abtrennmaterial nach einem der vorhergehenden Ansprüche, wobei die mindestens eine Geotextilmaterialschicht eine obere Geotextilschicht und eine untere Geotextilschicht umfasst und die mindestens eine Vliesstoffschicht zwischen der oberen Geotextilschicht und der unteren Geotextilschicht eingebettet ist.

8. Abtrennmaterial nach einem der vorhergehenden Ansprüche, ferner umfassend ein Textilmaterial zwischen der mindestens einen Vliesstoffschicht und der mindestens einen Geotextilmaterialschicht.

9. Abtrennmaterial nach einem der vorhergehenden Ansprüche, ferner umfassend eine oder mehrere zusätzliche Schichten, die aus einem oder mehreren der folgenden ausgewählt sind: (i) einem Geotextilmaterial; (ii) einem Kunststoffgitter oder -sieb; und (iii) einem Drainagematerial, das einen oder mehrere Kanäle für den Fluss von Flüssigkeit definiert.

10. Abtrennvorrichtung für Untergleisschotter oder Bahngleisbettauskleidung, umfassend ein Abtrennmaterial nach einem der vorhergehenden Ansprüche.

11. Verfahren zum Herstellen eines Abtrennverbundmaterials für lehm- und/oder schluffhaltiges Erdreich, wobei das Verfahren Folgendes umfasst:
Bilden einer Vliesstoffschicht aus mindestens einer Polymerfaserschicht; Kalandrieren der Vliesstoffschicht, um einen Vliesstoff zu bilden, der flüssigkeitsdurchlässig ist und dabei eine maximale Porengröße zwischen 5 und 40 µm, ermittelt gemäß dem ASTM F316-03(2011), aufweist; und
Anhaften mindestens einer Geotextilmaterialschicht an die Vliesstoffschicht, um ein Abtrennverbundmaterial zu bilden, das Lehm- und/oder Schluffpartikel herausfiltern kann, aber flüssigkeitsdurchlässig ist.

12. Verfahren nach Anspruch 11, wobei das Anhaften der mindestens einen Geotextilmaterialschicht an die Vliesstoffschicht thermisches Verbinden oder Flammlaminieren umfasst.

13. Verfahren nach einem der Ansprüche 11-12, ferner umfassend das Auftragen eines Textilmaterials auf eine oder mehrere Flächen des Vliesstoffs nach dem Kalandrieren und vor dem Anhaften der mindestens einen Geotextilmaterialschicht an den Vliesstoff.

14. Verfahren nach einem der Ansprüche 11-13, ferner umfassend das Behandeln einer Fläche des Vliesstoffs mit einem Tensid.

15. Verfahren zum Auskleiden eines Bahngleisbetts, wobei das Verfahren Folgendes umfasst: Bereitstellen eines Abtrennmaterials, das mindesten eine Schicht eines Vliesstoffs umfasst, der aus Polymerfasern gebildet ist, wobei der Vliesstoff kalandriert wurde, um ein Material zu erhalten, das Lehm- und/oder Schluffpartikel herausfiltern kann, aber flüssigkeitsdurchlässig ist, wobei es eine maximale Porengröße zwischen 5 und 40 µm, ermittelt gemäß dem ASTM F316-03(2011), aufweist; und
Installieren des Abtrennmaterials im Gleisbett zwischen einer Erdschicht und einer Schotterschicht.

## Revendications

1. Matériau séparateur pour sol de fondation contenant de l'argile et/ou du limon, ledit matériau séparateur comprenant un composite constitué d'au moins une couche d'un matériau géotextile et au moins une couche de tissu non tissé constitué de fibres polymères, éventuellement de fibres polymères filées-liées, ledit tissu non-tissé ayant été calandré de façon à obtenir un matériau capable de filtrer des particules d'argile et/ou de limon mais perméable à un liquide tout en possédant une taille de pore maximale comprise entre 5 et 40 µm telle que déterminée selon la norme ASTM F316-03(2011).

2. Matériau séparateur selon la revendication 1, lesdites fibres polymères étant des fibres à deux composants comprenant un premier composant polymère constitué d'un polymère à point de fusion relativement plus bas et un second composant polymère constitué d'un polymère à point de fusion relativement plus élevé, éventuellement, le premier composant polymère et le second composant polymère présentant une différence de points de fusion supérieure ou égale à 10°C.

3. Matériau séparateur selon la revendication 2, un rapport de poids du premier composant polymère par rapport au second composant polymère étant de 30:70.

4. Matériau séparateur selon l'une quelconque des revendications précédentes, ledit tissu non tissé possédant une taille moyenne de pore d'écoulement (MFP) comprise entre 0,2 et 1 µm.

5. Matériau séparateur selon l'une quelconque des revendications précédentes, ledit matériau géotextile étant un matériau non tissé présentant une taille de pore caractéristique qui est supérieure ou égale à 70 µm, 80 µm, 90 µm, ou supérieure à 100 µm déterminée selon la norme EN ISO 12956.

6. Matériau séparateur selon l'une quelconque des revendications précédentes, ladite au moins une couche de matériau géotextile et ladite au moins une couche de tissu non tissé étant stratifiées, éventuellement doublées à la flamme, ensemble ou thermosoudées ensemble.

7. Matériau séparateur selon l'une quelconque des revendications précédentes, ladite au moins une couche d'un matériau géotextile comprenant une couche géotextile supérieure et une couche géotextile inférieure et ladite au moins une couche d'un tissu non tissé étant intercalée entre la couche géotextile supérieure et la couche géotextile inférieure.

8. Matériau séparateur selon l'une quelconque des revendications précédentes, comprenant en outre un matériau textile entre l'au moins une couche d'un tissu non tissé et l'au moins une couche d'un matériau géotextile.

9. Matériau séparateur selon l'une quelconque des revendications précédentes, comprenant en outre une ou plusieurs couches supplémentaires choisies parmi une quelconque ou plusieurs de : (i) un matériau géotextile ; (ii) une grille ou un maillage en plastique ; et (iii) un matériau de drainage définissant un ou plusieurs canaux pour l'écoulement de liquide.

10. Séparateur de sous-ballast ou revêtement d'assiette de voie de chemin de fer comprenant un matériau séparateur selon l'une quelconque des revendications précédentes.

11. Procédé de fabrication d'un matériau séparateur composite pour sol de fondation contenant de l'argile et/ou du limon, ledit procédé comprenant :
la constitution d'une couche de tissu non tissé à partir d'au moins une couche de fibres polymères ;
le calandrage de la couche de tissu non tissé pour constituer un tissu non tissé perméable à un liquide tout en possédant une taille maximale de pore comprise entre 5 et 40 µm telle que déterminée selon la norme ASTM F316-03(2011) ; et
l'adhésion d'au moins une couche d'un matériau géotextile à la couche de tissu non tissé pour constituer un matériau séparateur composite capable de filtrer des particules d'argile et/ou de limon mais perméable à un liquide.

12. Procédé selon la revendication 11, ladite adhésion de l'au moins une couche d'un matériau géotextile à la couche de tissu non-tissé comprenant un thermosoudage ou un doublage à la flamme.

13. Procédé selon l'une quelconque des revendications 11 à 12, comprenant en outre l'application d'un matériau textile à une ou plusieurs surfaces du tissu non tissé après le calandrage et avant l'adhésion d'au moins une couche d'un matériau géotextile au tissu non tissé.

14. Procédé selon l'une quelconque des revendications 11 à 13, comprenant en outre le traitement d'une surface du tissu non tissé avec un tensio-actif.

15. Procédé de revêtement d'une assiette de voie de chemin de fer, ledit procédé comprenant : l'obtention d'un matériau séparateur comprenant au moins une couche d'un tissu non tissé constituée de fibres polymères, le tissu non-tissé ayant été calandré de façon à obtenir un matériau capable de filtrer des particules d'argile et/ou de limon mais perméable à un liquide tout en possédant une taille maximale de pore comprise entre 5 et 40 µm telle que déterminée selon la norme ASTM F316-03(2011) ; et
l'installation du matériau séparateur dans l'assiette de la voie entre une couche de sol de fondation et une couche de ballast.
